# EUROPÄISCHE PATENTANMELDUNG

(11) **EP 2 316 720 A1**
(43) Veröffentlichungstag der Anmeldung: **04.05.2011**
(21) Anmeldenummer: 09013598.9
(22) Anmeldetag: 29.10.2009
(51) Int. Cl.: B63B 23/46

(54) **Wasserfahrzeug**

(71) Anmelder: Overdick GmbH & Co. KG, 20457 Hamburg (DE)
(72) Erfinder: Günther, Jan Henning, 22081 Hamburg (DE)
(74) Vertreter: Mönkemeyer, Philipp

(57) **Zusammenfassung**

Wasserfahrzeug, umfassend mindestens ein Befestigungsseil, welches mit einem Ende mit einer auf dem Wasserfahrzeug angeordneten Seilwinde verbunden ist, weiter umfassend Errichtungsmittel, mit denen zumindest ein Abschnitt des Befestigungsseils an einen Ort oberhalb des Wasserfahrzeugs gebracht werden kann, so dass das Befestigungsseil an einer oberhalb des Wasserfahrzeugs befindlichen Aufhängungseinrichtung einer Offshore-Struktur eingehängt werden kann, wobei das Wasserfahrzeug im an der Aufhängungseinrichtung der Offshore-Struktur eingehängten Zustand des Befestigungsseils durch Aufwickeln des Befestigungsseils auf die Seilwinde an der Aufhängungseinrichtung der Offshore-Struktur hängend aus dem Wasser gehoben werden kann.

## Beschreibung

Die Erfindung betrifft ein Wasserfahrzeug, welches insbesondere zum Anlegen an eine unbemannte Offshore-Installation, beispielsweise eine Offshore-Windenergieanlage, dient. Unbemannte Offshore-Strukturen erfordern eine regelmäßige Wartung oder Reparatur. Dafür muss ein Serviceteam Zugang zu der Offshore-Installation erhalten. Um einen damit verbundenen Ausfall der Anlage so kurz wie möglich zu halten, ist es von entscheidender Bedeutung, die Offshore-Struktur auch unter schlechten Wetterbedingungen, beispielsweise starkem Wind und hohem Seegang, erreichen zu können. Die Gefahr für das Wartungspersonal muss dabei soweit wie möglich verringert werden.

Es ist bekannt, Personal durch einen Helikopter an Bord einer Offshore-Struktur zu bringen. Dies ist allerdings teuer und es kann nur eine vergleichsweise geringe Ladung transportiert werden (zum Beispiel kleinere Werkzeuge und Ersatzteile). Darüber hinaus ist ein Transfer durch Helikopter in erheblichem Maße wetterabhängig. Es wurden darüber hinaus an der jeweiligen Offshore-Struktur vorgesehene Hebesysteme, umfassend beispielsweise eine Seilwinde, vorgeschlagen, mit denen ein das Wartungspersonal tragendes Wasserfahrzeug auf die Höhe eines Zugangs zu der Offshore-Struktur gehoben werden kann. Nachteilig ist allerdings, dass jede zu wartende Offshore-Struktur, beispielsweise jede Offshore-Windenergieanlage eines Windparks, mit einem solchen Hebesystem ausgestattet werden muss. Weiterhin sind aufwendig gestaltete Zugangssysteme, insbesondere Gangways mit einer geeigneten hydraulischen Steuerungs- und Seegangsfolgeeinrichtung, auf dem Wasserfahrzeug vorgeschlagen worden. Neben dem mit solchen Systemen verbundenen hohen konstruktiven und damit finanziellen Aufwand ist der Übergang des Personals von dem Wasserfahrzeug auf die Offshore-Struktur insbesondere bei schlechten Wetterbedingungen gefährlich. Gleiches gilt für an den Offshore-Strukturen vorgesehene Leitersysteme, an denen das Wartungspersonal hinaufklettern muss. Auch sind konstruktiv komplizierte Roboterarmsysteme vorgeschlagen worden, die auf dem Wasserfahrzeug angebracht sind, um Wartungspersonal einen Zugang in die Offshore-Struktur zu ermöglichen.

Ausgehend von dem erläuterten Stand der Technik liegt der Erfindung die Aufgabe zugrunde, ein Wasserfahrzeug zum Anlegen an einer Offshore-Struktur bereit zu stellen, mit dem ein Zugang zu der Offshore-Struktur, beispielsweise für eine Wartung, in konstruktiv einfacher, kostengünstiger und für das Wartungspersonal sicherer Weise auch bei schlechten Wetterbedingungen möglich ist.

Die Erfindung löst diese Aufgabe durch den Gegenstand von Anspruch 1. Vorteilhafte Ausgestaltungen finden sich in den abhängigen Ansprüchen, der Beschreibung und den Figuren.

Die Erfindung löst die Aufgabe durch ein Wasserfahrzeug, umfassend mindestens ein Befestigungsseil, welches mit einem Ende mit einer auf dem Wasserfahrzeug angeordneten Seilwinde verbunden ist, weiter umfassend Errichtungsmittel, mit denen zumindest ein Abschnitt des Befestigungsseils an einen Ort oberhalb des Wasserfahrzeugs gebracht werden kann, so dass das Befestigungsseil an einer oberhalb des Wasserfahrzeugs befindlichen Aufhängungseinrichtung einer Offshore-Struktur eingehängt werden kann, wobei das Wasserfahrzeug im an der Aufhängungseinrichtung der Offshore-Struktur eingehängten Zustand des Befestigungsseils durch Aufwickeln des Befestigungsseils auf die Seilwinde an der Aufhängungseinrichtung der Offshore-Struktur hängend aus dem Wasser gehoben werden kann.

Das erfindungsgemäße Wasserfahrzeug dient zum Anlegen an einer im Wasser befindlichen, insbesondere unbemannten Struktur, um die Struktur zum Beispiel zu warten oder zu reparieren. Das Wasserfahrzeug kann selbstangetrieben sein. Grundsätzlich sind aber auch Wasserfahrzeuge denkbar, die fremdangetrieben sind, beispielsweise durch ein anderes Wasserfahrzeug. Die Offshore-Struktur kann ein auf dem Meeresboden gegründetes Offshore-Bauwerk, insbesondere eine Offshore-Windenergieanlage, sein. Als Offshore-Struktur ist aber auch ein anderes, insbesondere größeres Wasserfahrzeug denkbar. Die Offshore-Struktur besitzt eine fest an dieser installierte Aufhängungseinrichtung, beispielsweise einen Haken oder ähnliches. Die erfindungsgemäßen Errichtungsmittel des Wasserfahrzeugs dienen dazu, das Befestigungsseil in eine ausreichende Höhe zu verbringen, so dass es in die oberhalb des Wasserfahrzeugs befindliche Aufhängungseinrichtung der Offshore-Struktur eingehängt oder eingeklinkt werden kann. Das Befestigungsseil kann mit einem ersten Ende auf dem Wasserfahrzeug befestigt und mit einem zweiten Ende mit der auf dem Wasserfahrzeug angeordneten Seilwinde verbunden sein. Dann können die Errichtungsmittel das Befestigungsseil beispielsweise schlaufen- oder schlingenartig aufspannen. Das Befestigungsseil bildet einen Aufhängungspunkt oberhalb des Wasserfahrzeugs. Im in die Aufhängungseinrichtung eingehängten Zustand kann das Befestigungsseil relativ zu der Aufhängungseinrichtung beweglich sein, beispielsweise durch die Aufhängungseinrichtung hindurch ziehbar sein, wobei es allerdings von der Aufhängungseinrichtung geführt wird. Das Befestigungsseil kann im eingehängten Zustand aber auch fest mit der Aufhängungseinrichtung verbunden sein. Insbesondere kann das Befestigungsseil auch mit seinem einen Ende an der Seilwinde und mit seinem anderen Ende an den Errichtungsmitteln befestigt sein.

Das erfindungsgemäße Wasserfahrzeug ist in der Lage, sich mit Hilfe des an der Aufhängungseinrichtung der Offshore-Struktur eingehängten Befestigungsseils und der Seilwinde, die zum Beispiel eine Winsch sein kann, an der Offshore-Struktur selbst aus dem Wasser nach oben zu ziehen. Beispielsweise wird durch das Aufwickeln des Befestigungsseils auf der Seilwinde eine durch die Errichtungsmittel aufgespannte Seilschlinge verkleinert. Aufgrund der Befestigung des Seils auf dem Wasserfahrzeug einerseits und der Verbindung des Befestigungsseils mit der an der Offshore-Struktur fest installierten Aufhängungseinrichtung andererseits führt dies zu einem Anheben des Wasserfahrzeugs aus dem Wasser. Das Wasserfahrzeug kann sich auf diese Weise bis auf eine Höhe aus dem Wasser heben, in der die Insassen des Fahrzeugs die Offshore-Struktur durch einen Einstieg betreten können. In entsprechender Weise kann sich das erfindungsgemäße Wasserfahrzeug durch ein Abwickeln des Befestigungsseils von der Seilwinde wieder auf die Wasseroberfläche absenken. Beim Heben aus dem Wasser und beim Absenken auf das Wasser verbleibt das Wasserfahrzeug im Wesentlichen in seiner (horizontalen) Lage, in der es auch auf dem Wasser schwimmt. Dazu sind der Aufhängungspunkt des Befestigungsseils und die Befestigung desselben an der Seilwinde und gegebenenfalls dem Wasserfahrzeug in geeigneter Weise gewählt, um ein Verkippen des Wasserfahrzeugs beim Anheben oder Absenken sicher zu verhindern. Insbesondere kann der Aufhängungspunkt des Befestigungsseil in vertikaler Richtung oberhalb des Schwerpunkts des Wasserfahrzeugs liegen. Natürlich können auch mehrere Aufhängungspunkte und gegebenenfalls Aufhängungseinrichtungen vorgesehen sein. Das Befestigungsseil, die Seilwinde sowie die zugehörigen Befestigungen sind so ausgelegt, das sie das Gewicht des Wasserfahrzeugs beim Anheben sicher tragen. Dazu kann das Befestigungsseil insbesondere ein ausreichend starkes Drahtseil sein.

Erfindungsgemäß ist also eine Hebeeinrichtung zum Anheben und Absenken des Wasserfahrzeugs auf dem Wasserfahrzeug selbst angeordnet. Dadurch ist eine solche Hebeeinrichtung nicht in aufwendiger Weise auf jeder Offshore-Struktur erforderlich. Darüber hinaus zeichnet sich die erfindungsgemäße Hebeeinrichtung durch konstruktive Einfachheit und damit Robustheit aus, so dass die mit der Hebeeinrichtung verbundenen Kosten reduziert werden können. Das Wartungspersonal muss nicht in gefährlicher Weise von einem schwimmenden Boot auf die Offshore-Struktur gelangen, sondern das erfindungsgemäße Wasserfahrzeug wird vollständig einschließlich des Personals aus dem Wasser gehoben. Die Offshore-Struktur muss dazu lediglich in einfacher Weise mit einer fest installierten Aufhängungseinrichtung versehen werden. Das Wartungspersonal wird darüber hinaus nur in geringer Weise den Wetterbedingungen ausgesetzt. Dadurch ist ein Zutritt zu der Offshore-Struktur auch bei starkem Wind und/oder hohem Seegang möglich. Ausfallzeiten der Offshore-Struktur werden minimiert.

Die Enden des Befestigungsseils können auf dem Wasserfahrzeug entlang einer senkrecht zur Längsachse des Wasserfahrzeugs verlaufenden Linie angeordnet sein. Die Befestigungspunkte sind dabei der Befestigungsort des ersten Endes des Befestigungsseils auf dem Wasserfahrzeug und der Befestigungsort des zweiten Endes an der auf dem Wasserfahrzeug befindlichen Seilwinde. Die Längsachse des Wasserfahrzeugs verläuft üblicherweise in Richtung der Vorwärts- bzw. Rückwärtsbewegung des Fahrzeugs. Durch diese Anordnung der Befestigungspunkte wird eine seitliche Verkippung des Wasserfahrzeugs beim Anheben aus dem Wasser sicher vermieden.

Nach einem ersten Ausführungsbeispiel der Erfindung kann das Befestigungsseil mit seinem ersten Ende lösbar an dem Wasserfahrzeug befestigt sein, und die Errichtungsmittel mindestens zwei Errichtungsstangen umfassen, die jeweils mit einem ersten Ende auf dem Wasserfahrzeug befestigt sind, und die jeweils mit einem zweiten Ende lösbar an dem Befestigungsseil befestigbar sind. Durch solche langen Errichtungsstangen wird das Befestigungsseil schlingen- oder schlaufenartig über dem Wasserfahrzeug aufgespannt. Insbesondere besitzen die Errichtungsstangen eine geeignete Länge, um die aufgespannte Seilschlinge in eine ausreichende Höhe für das Einhängen in die Aufhängungseinrichtung der Offshore-Struktur zu bringen. Es kann dabei beispielsweise ein Trapezähnliches Aufspannen des Seils erfolgen. Natürlich können die ersten Enden der Errichtungsstangen ebenfalls lösbar auf dem Wasserfahrzeug befestigt sein. Sie können aber auch permanent auf dem Wasserfahrzeug befestigt sein. Dazu kann weiter vorgesehen sein, dass die Errichtungsstangen jeweils mit ihrem ersten Ende um mindestens eine gemeinsame horizontale Schwenkachse schwenkbar auf dem Wasserfahrzeug befestigt sind. Wenn in dieser Anmeldung von horizontal oder vertikal gesprochen wird, bezieht sich dies auf den Meeresspiegel. Die Schwenkachse kann dabei insbesondere senkrecht zur Längsachse des Wasserfahrzeugs verlaufen. Durch die Schwenkbarkeit der Errichtungsstangen wird sowohl das Aufspannen des Befestigungsseils als auch das Positionieren der Seilschlinge für das Einhängen in die Aufhängungseinrichtung bei Wellengang erheblich erleichtert. Das Aufspannen und Positionieren des Befestigungsseils wird weiter erleichtert, wenn die Errichtungsstangen biegsam sind. Es kann weiter vorgesehen sein, dass sich die zweiten Enden der Errichtungsstangen bei einem Einhängen des Befestigungsseils in die Aufhängungseinrichtung der Offshore-Struktur selbsttätig von dem Befestigungsseil lösen. Dazu kann eine geeignete und dem Fachmann an sich bekannte selbsttätig öffnende Entriegelungseinrichtung vorgesehen sein. Anschließend können die Errichtungsstangen beispielsweise an Deck des Wasserfahrzeugs abgelegt werden und das Wasserfahrzeug kann durch Aufwickeln des Befestigungsseils auf die Seilwinde angehoben werden. Das Seil wird dabei durch die Aufhängungseinrichtung hindurchgezogen, von dieser jedoch jederzeit sicher geführt, so dass sich das Befestigungsseil nicht von der Aufhängungseinrichtung lösen kann. Um Reibungsverluste zwischen dem Befestigungsseil und der Aufhängungseinrichtung zu minimieren, kann das Befestigungsseil an der Aufhängungseinrichtung über eine Rolle geführt werden. Diese Umleitung über eine Rolle reduziert auch die an der Seilwinde anliegende Last auf etwa die Hälfte des Gewichts des Wasserfahrzeugs.

Zum anschließenden Absenken des Wasserfahrzeugs auf das Wasser wird das Befestigungsseil entsprechend von der Seilwinde abgelassen. Das Befestigungsseil ist bei diesem Ausführungsbeispiel mit seinem der Seilwinde abgewandten ersten Ende durch eine geeignete lösbare Befestigungseinrichtung an dem Wasserfahrzeug verankert. Ein Lösen dieser Befestigungseinrichtung ist dabei nach einer bevorzugten Ausgestaltung nur möglich, wenn an dem Befestigungsseil keine Last anliegt. Auf diese Weise wird ein vorzeitiges Lösen des noch in der Luft befindlichen Wasserfahrzeugs sicher vermieden. Sobald sich das Fahrzeug im Wasser befindet, wird die Befestigung des ersten Endes gelöst, so dass durch ein erneutes Aufwickeln des Befestigungsseils auf die Seilwinde dieses mit seinem gelösten ersten Ende nach oben durch die Aufhängungseinrichtung hindurchgezogen und auf das Wasserfahrzeug gebracht werden kann. Es ist auch möglich, dass die Befestigungseinrichtung beim Aufsetzen des Wasserfahrzeugs auf die Wasseroberfläche das erste Ende des Befestigungsseils selbsttätig von dem Wasserfahrzeug löst. Um zu verhindern, dass das Befestigungsseil in unkontrollierter Weise auf das Wasserfahrzeug fällt, kann an dem ersten Ende des Befestigungsseils ein Pilotseil mit seinem ersten Ende befestigt sein, wobei das Pilotseil mit seinem zweiten Ende an einer ebenfalls auf dem Wasserfahrzeug angeordneten Pilotseilwinde befestigt ist. Dieses im Vergleich zu dem Befestigungsseil erheblich dünnere und damit leichtere Pilotseil wird beim Aufwickeln des einseitig gelösten Befestigungsseils von der Pilotseilwinde gegen eine durch die Seilwinde erzeugte Reibungsbremswirkung abgewickelt und verhindert so das unkontrollierte Herabfallen des Befestigungsseils. Wenn das Befestigungsseil vollständig auf die Hauptseilwinde aufgewickelt ist, wird die dünnere und leichtere Pilotleine von der Pilotseilwinde gelöst und ebenfalls durch die Aufhängungseinrichtung der Offshore-Struktur hindurch an Bord des Wasserfahrzeugs gezogen. Anschließend kann die Hebeeinrichtung für den nächsten Gebrauch an Bord des Wasserfahrzeugs wieder montiert werden.

Nach einem zweiten Ausführungsbeispiel der Erfindung kann vorgesehen sein, dass die Errichtungsmittel mindestens zwei biegsame Errichtungsstangen umfassen, die jeweils mit einem ersten Ende auf dem Wasserfahrzeug befestigt sind, und die jeweils an einem zweiten Ende mit einer Befestigungsvorrichtung verbunden sind, die zum einen das Befestigungsseil führt, und die zum anderen lösbar an der Aufhängungseinrichtung der Offshore-Struktur befestigbar ist. Die Befestigungsvorrichtung kann zum Beispiel ein Greifhaken sein, der in eine Aufhängungseinrichtung der Offshore-Struktur eingreifen kann. Sofern das Befestigungsseil mit seinem ersten Ende beispielsweise an Deck des Wasserfahrzeugs und mit seinem zweiten Ende mit der Seilwinde verbunden ist, kann die Befestigungsvorrichtung in besonders praxisgemäßer Weise eine das Befestigungsseil führende Öse aufweisen, durch die das Befestigungsseil laufen kann. Es ist aber auch möglich, dass das Befestigungsseil nur mit einem Ende mit der Seilwinde verbunden ist und mit seinem anderen Ende fest mit der Befestigungsvorrichtung der Errichtungsstangen verbunden ist. Die Errichtungsstangen halten in ihrem entspannten Zustand zumindest einen Abschnitt des Befestigungsseils über dem Wasserfahrzeug. Abhängig von der Länge des Befestigungsseils können sie auch in diesem weitgehend entspannten Zustand bereits eine Biegung besitzen. Durch ein Einfahren der Seilwinde und damit des Befestigungsseils werden die Errichtungsstangen mit ihren zweiten Enden (weiter) auf das Wasserfahrzeug hin gebogen, wobei sich das Wasserfahrzeug aus dem Wasser hebt. Die mit den zweiten Enden der Errichtungsstangen verbundene Befestigungsvorrichtung kann dabei insbesondere gemeinsam für beide Stangen vorgesehen sein. Das Befestigungsseil wird von der Seilwinde abgewickelt, so dass sich die Errichtungsstangen und mit ihnen die an ihrem zweiten Ende vorgesehene Befestigungsvorrichtung beispielsweise bei Erreichen der Offshore-Struktur durch das Wasserfahrzeug nach oben anheben. Das Wasserfahrzeug kann dann in eine Position gebracht werden, in der die an den Errichtungsstangen vorgesehene Befestigungsvorrichtung in die Aufhängungseinrichtung der Offshore-Struktur einklinkt. Werden die Seilwinde und das Befestigungsseil nun aufgewickelt, biegen sich die Errichtungsstangen in der oben erläuterten Weise in Richtung des Wasserfahrzeugs und dieses wird aus dem Wasser gehoben. Durch ein Abwickeln des Befestigungsseils von der Seilwinde kann das Wasserfahrzeug anschließend wieder auf die Wasseroberfläche abgesenkt werden, wobei sich die Errichtungsstangen wieder in ihren entspannten Zustand zurückbewegen. Die Errichtungsstangen verhindern dabei ein Herabfallen der Befestigungsvorrichtung auf das Wasserfahrzeug. Zum Entfernen des Wasserfahrzeugs von der Offshore-Struktur wird die an den Errichtungsstangen vorgesehene Befestigungsvorrichtung wieder von der Aufhängungseinrichtung der Offshore-Struktur gelöst.

Darüber hinaus können sowohl bei dem ersten als auch bei dem zweiten Ausführungsbeispiel der Erfindung die Errichtungsstangen längenverstellbar sein. Dies erleichtert die Anwendung der Errichtungsmittel bei unterschiedlicher Tide. Alternativ ist es auch möglich, an Bord mehrere Errichtungsstangen unterschiedlicher Länge vorrätig zu halten. Die Steifheit der Errichtungsstangen muss groß genug sein, um bei einem Abwickeln des Befestigungsseils von der Seilwinde das Befestigungsseil und damit auch die Befestigungsvorrichtung nach oben zu ziehen. Als besonders praxisgemäß hat sich Fieberglas als Material für die Errichtungsstangen erwiesen. Um bei starkem Seegang das Einhängen der Befestigungsvorrichtung in die Aufhängungseinrichtung der Offshore-Struktur zu erleichtern, sollten die aufgerichteten Errichtungsstangen sich möglichst wenig bewegen. Indem vorzugsweise zwei Errichtungsstangen vorgesehen sind, können seitliche Bewegungen weitgehend unterbunden werden. Um die Steifheit der Errichtungsstangen anpassen zu können, können diese über eine Schwenklagerung auf dem Wasserfahrzeug angeordnet sein. Es ist auch möglich, den Winkel der Errichtungsstangen relativ zur Horizontalen einzustellen oder beispielsweise eine Rotationsfeder an den Errichtungsstangen vorzusehen. Ebenfalls können bei den vorgenannten Ausführungsbeispielen die Befestigungspunkte der ersten Enden der Errichtungsstangen auf dem Wasserfahrzeug entlang einer senkrecht zur Längsachse des Wasserfahrzeugs verlaufenden Linie angeordnet sein.

Nach einem dritten Ausführungsbeispiel der Erfindung kann vorgesehen sein, dass die Errichtungsmittel einen Errichtungsrahmen aufweisen, der mindestens zwei V-förmig miteinander verbundene Schenkel besitzt, wobei die Schenkel an ihren miteinander verbundenen Enden lösbar mit einer Befestigungsvorrichtung verbunden sind, an der zum einen das Befestigungsseil befestigt ist, und die zum anderen lösbar an der Aufhängungseinrichtung der Offshore-Struktur befestigbar ist, und wobei die Schenkel mit ihren freien Enden um mindestens eine gemeinsame horizontale Achse schwenkbar auf dem Wasserfahrzeug gelagert sind. Um eine größere Steifigkeit zu erreichen, kann der Errichtungsrahmen insbesondere eine A-Form besitzen. Der Rahmen kann auch flexibel sein. Wiederum kann die mit den verbundenen Enden der Schenkel des Rahmens lösbar verbundene Befestigungsvorrichtung zum Beispiel ein Greifhaken sein, der in eine Aufhängungseinrichtung der Offshore-Struktur eingreifen kann. Die Schenkel können mit ihren freien Enden auch um mindestens zwei gemeinsame horizontale Achsen schwenkbar auf dem Wasserfahrzeug gelagert sein. Die Schwenkachsen können zum Beispiel in Längs-und Querrichtung des Wasserfahrzeugs verlaufen. Um rollende Bewegungen des Wasserfahrzeugs zu kompensieren, kann also eine seitliche Verschwenkung des Errichtungsrahmens ermöglicht werden. Eine solche Bewegung kann zur Anpassung an möglichen Wellengang durch ein an sich bekanntes passives System mit Gegengewichten und Dämpfern oder auch durch ein ebenfalls an sich bekanntes aktives Ausgleichssystem erfolgen. In einer die Benutzung der Errichtungsmittel vereinfachenden Weise kann sich die Befestigungsvorrichtung bei einem Befestigen an der Aufhängungseinrichtung der Offshore-Struktur selbsttätig von dem Errichtungsrahmen lösen. Weiterhin kann auf dem Wasserfahrzeug eine Pilotseilwinde angeordnet sein, mit der ein Pilotseil mit einem ersten Ende verbunden ist, wobei das Pilotseil durch eine im Bereich der Verbindung der Schenkel des Errichtungsrahmens angeordnete Führungseinrichtung verläuft und mit einem zweiten Ende an der Befestigungsvorrichtung befestigt ist. Es ist also wiederum eine Pilotleine vorgesehen, die erheblich dünner und damit auch leichter ist als das Befestigungsseil. Sie verläuft ausgehend von der Pilotseilwinde entlang des Errichtungsrahmens durch die Führungseinrichtung an der Verbindung der Schenkel des Rahmens und anschließend zu der Befestigungsvorrichtung. Bei Erreichen der Offshore-Struktur durch das Wasserfahrzeug wird der schwenkbare Errichtungsrahmen angehoben, wobei auch die an diesem vorgesehene Befestigungsvorrichtung einschließlich des Befestigungsseils in eine Position oberhalb des Wasserfahrzeugs behoben wird. Das Wasserfahrzeug wird dann in eine geeignete Position manövriert, in der die Befestigungsvorrichtung an der Aufhängungseinrichtung der Offshore-Struktur einklinkt. Danach wird die Befestigungsvorrichtung von dem Errichtungsrahmen gelöst. Sie ist jedoch weiterhin mit dem Befestigungsseil verbunden. Wird nun das Befestigungsseil auf die Seilwinde aufgewickelt, entfernt sich die Befestigungsvorrichtung von der Spitze des V-förmigen Errichtungsrahmen in Richtung der Seilwinde. Dadurch wird das Wasserfahrzeug aus dem Wasser gehoben. Das an der Befestigungsvorrichtung befestigte Pilotseil wird dabei von der Pilotseilwinde abgewickelt. Durch ein Aufwickeln des Pilotseils auf die Pilotseilwinde kann das Befestigungsseil und mit ihm die Befestigungsvorrichtung beim anschließenden Absenken des Wasserfahrzeugs wieder zu der Spitze des Errichtungsrahmes gezogen werden. Die Befestigungsvorrichtung kann nach dem Aufsetzen des Wasserfahrzeugs auf der Wasseroberfläche von der Aufhängungseinrichtung der Offshore-Struktur gelöst werden, so dass das Wasserfahrzeug sich von der Offshore-Struktur entfernen kann. Für den Transport wird der Errichtungsrahmen beispielsweise auf dem Hauptdeck des Wasserfahrzeugs abgelegt. Dazu kann die Geometrie des Errichtungsrahmens an die Deckform angepasst sein. Das Aufrichten des Errichtungsrahmens kann beispielsweise mit einem hydraulischen System, elektrischen Antrieben einer Seilrolle und/oder Seilwinde erfolgen. Die Schwenklagerung des Errichtungsrahmens, die beispielsweise am Heck des Wasserfahrzeugs vorgesehen sein kann, kann dabei durch eine Feder vorgespannt sein, um den Errichtungsrahmen im Falle einer Kollision mit der Offshore-Struktur zu schützen.

Bei dem erläuterten zweiten und dritten Ausführungsbeispiel kann weiter vorgesehen sein, dass die Befestigungsvorrichtung eine von dem Wasserfahrzeug aus fernbedienbare Entriegelungseinrichtung zum Lösen der Befestigungsvorrichtung von der Aufhängungseinrichtung der Offshore-Struktur aufweist. Derartige fernbedienbare Befestigungsvorrichtungen sind dem Fachmann an sich bekannt. Ein ferngesteuertes Lösen der jeweiligen Befestigungsvorrichtung kann zum Beispiel mechanisch (zum Beispiel über einen Bowdenzug), pneumatisch oder hydraulisch erfolgen. Die Auslösung kann beispielsweise mittels eines Handhebels oder einer Handpumpe auf dem Boot erfolgen, welche jeweils über Draht oder Schlauch mit dem entsprechenden Aktuator am Haken verbunden sind. Solche Systeme sind grundsätzlich bekannt und werden z.B. zur Auslösung von Schlepphaken auf Schleppern verwendet. Eine fernbedienbare Entriegelungseinrichtung für die Befestigungsvorrichtung ist insbesondere angesichts der schlechten Zugänglichkeit der Befestigungsvorrichtung im in die Aufhängungseinrichtung aufgehängten Zustand vorteilhaft. Eine Drahtlosverbindung zum Beispiel per Funk wäre für die Fernbedienung zwar ebenfalls denkbar. Aufgrund der rauen Betriebsbedingungen besteht dabei jedoch eine hohe Störanfälligkeit. Weiterhin kann die bei dem zweiten und dritten Ausführungsbeispiel vorgesehene Befestigungsvorrichtung auch in einer gegenüber den Errichtungsstangen bzw. dem Errichtungsrahmen abgesenkten Position fixiert werden. Auf diese Weise ist das Wasserfahrzeug nicht nur durch die Bremse der Seilwinde in der Luft gehalten. Eine solche Befestigungsvorrichtung kann auch mit anderen Hebeeinrichtungen, zum Beispiel sogenannten Single-Lifting-Point-Davit-Systemen verwendet werden, um das Wasserfahrzeug auf ein größeres Wasserfahrzeug oder eine möglicherweise bemannte Plattform zu heben. Die Befestigungsvorrichtung selbst hat drei Betriebszustände. In einem offenen Betriebszustand ist die Vorrichtung offen und kann an der Aufhängungseinrichtung der Offshore-Installation befestigt werden. In einer geschlossenen Position ist die Befestigungsvorrichtung an der Aufhängungseinrichtung der Offshore-Installation befestigt. In einer Entriegelungsposition ist die Befestigungsvorrichtung beispielsweise ferngesteuert geöffnet worden, nachdem das Wasserfahrzeug auf die Wasseroberfläche abgesenkt wurde. Ein Entriegeln der Befestigungsvorrichtung während das Wasserfahrzeug noch in der Luft hängt kann automatisch unterbunden werden, beispielsweise durch eine geeignete Geometrie der Befestigungsvorrichtung oder durch einen Wasserdrucksensor an der Unterseite des Wasserfahrzeugs.

Die Erfindung betrifft auch ein System, umfassend die oben erläuterte Offshore-Struktur mit einer Aufhängungseinrichtung und ein erfindungsgemäßes Wasserfahrzeug. Da das gesamte Wasserfahrzeug angehoben werden muss, sind Wasserfahrzeuge mit geringem Gewicht und kleiner Größe bevorzugt. Beispielhaft genannt seien Boote mit einer Länge bis zu 10 Metern und bis zu etwa 6 Tonnen Gewicht. Als Material für das Wasserfahrzeug kommen beispielsweise Fieberglas oder Aluminium in Frage. Dabei kann auch eine Kabine für mehrere Personen vorgesehen sein. Derartige Boote sind schnell und können eine kleine Besatzung einschließlich Ladung tragen, sind dabei seetauglich und kostengünstig zu erwerben und zu betreiben. Abhängig von den jeweiligen Anforderungen kann das Wasserfahrzeug beispielsweise von Küstenhäfen aus operieren oder als Tender von einem größeren Mutterschiff. Auch ist der Betrieb ausgehend von einer bemannten Offshore-Installation, beispielsweise einer Transformer-Plattform eines Windparks, möglich. In einem solchen Fall kann das Wasserfahrzeug zusätzlich auch als Rettungsboot fungieren. Sofern das Wasserfahrzeug mit Schlafgelegenheiten, Verpflegung und Toiletten ausgestattet ist, kann es als Notunterkunft für die Besatzung dienen, wenn die Wetterbedingungen eine sichere Rückkehr von der Offshore-Struktur nicht zulassen. Es ist dann keine dauerhafte Rettungsunterkunft auf der Offshore-Struktur erforderlich. Der Antrieb der Seilwinde kann beispielsweise elektrisch oder elektrohydraulisch sein, mit der Möglichkeit einer Absenkung durch Schwerkraft. Zum Absenken und Anheben des Wasserfahrzeugs aus dem bzw. in das Wasser sollte die Seilwinde in der Lage sein, einen konstanten Druck auf das Befestigungsseil auch bei Wellengang auszuüben. Die Aufhängungseinrichtung auf der Offshore-Struktur kann beispielsweise an einem auskragenden Arm oder Balken angeordnet sein. Die Aufhängungseinrichtung kann das Befestigungsseil des Wasserfahrzeugs einfangen, sobald die Aufhängungseinrichtung unterhalb des Befestigungsseils geführt wird. Die Aufhängungseinrichtung kann ein Haken sein. Derartige Aufhängungseinrichtungen können in besonders einfacher Weise an bereits bestehende Strukturen angeschweißt werden.

Ein Ausführungsbeispiel der Erfindung wird nachfolgend anhand von Figuren näher erläutert. Es zeigen schematisch:
- Fig. 1: ein System aus einer Offshore-Struktur und einem erfindungsgemäßen Wasserfahrzeug nach einem ersten Ausführungsbeispiel in einer ersten Ansicht,
- Fig. 2: das System aus Fig. 1 in einer zweiten Ansicht,
- Fig. 3: das System aus Fig. 1 in einer dritten Ansicht,
- Fig. 4: das System aus Fig. 1 in einer vierten Ansicht,
- Fig. 5: ein System aus einer Offshore-Struktur und einem erfindungsgemäßen Wasserfahrzeug nach einem zweiten Ausführungsbeispiel in einer ersten Ansicht,
- Fig. 6: das System aus Fig. 5 in einer zweiten Ansicht,
- Fig. 7: ein System aus einer Offshore-Struktur und einem erfindungsgemäßen Wasserfahrzeug gemäß einem dritten Ausführungsbeispiel in einer ersten Ansicht,
- Fig. 8: das System aus Fig. 7 in einer zweiten Ansicht,
- Fig. 9: eine vertikale Schnittansicht einer lösbaren Befestigungseinrichtung für ein Befestigungsseil an dem Wasserfahrzeug,
- Fig. 10: einen Ausschnitt einer Aufhängungseinrichtung einer Offshore-Struktur,
- Fig. 11: eine Befestigungsvorrichtung eines erfindungsgemäßen Wasserfahrzeugs in einer ersten Ansicht,
- Fig. 12: die Befestigungsvorrichtung aus Fig. 11 in einer zweiten Ansicht,
- Fig. 13: die Befestigungsvorrichtung aus Fig. 11 in einer dritten Ansicht,
- Fig. 14: die Befestigungsvorrichtung aus Fig. 11 in einer vierten Ansicht, und
- Fig. 15: ein System aus einer Offshore-Struktur und einem erfindungsgemäßen Wasserfahrzeug nach einem weiteren Ausführungsbeispiel.

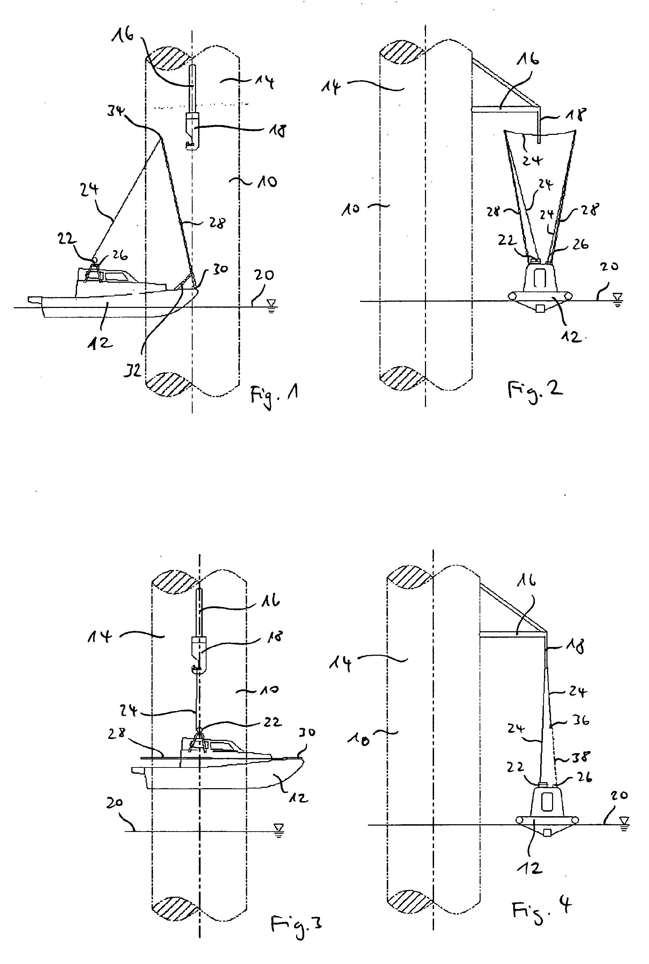

Soweit nichts anderes angegeben ist, bezeichnen in den Figuren gleiche Bezugszeichen gleiche Gegenstände. In den Figuren 1 und 2 ist ein erfindungsgemäßes System aus einer Offshore-Struktur 10 und einem Wasserfahrzeug 12 in zwei Ansichten in einer ersten Betriebsstellung gezeigt. Bei der Offshore-Struktur 10 handelt es sich um eine Offshore-Windenergieanlage, von der in der ausschnittsweisen Darstellung lediglich der Windenergieanlagenturm 14 dargestellt ist. An dem Windenergieanlagenturm 14 befindet sich eine über eine auskragende Balkenkonstruktion 16 befestigte Aufhängungseinrichtung 18, vorliegend ein Aufhängungshaken. Der Windenergieanlagenturm 14 ist auf dem Meeresboden in an sich bekannter Weise gegründet und verläuft somit durch die bei dem Bezugszeichen 20 schematisch gezeigte Wasseroberfläche, auf der auch das Wasserfahrzeug 12 schwimmt. An Deck des Wasserfahrzeugs 12 befindet sich eine Seilwinde 22, die ein Drahtbefestigungsseil 24 hält. Auf der der Seilwinde 22 abgewandten Seite ist das Befestigungsseil 24 über eine lösbare Deckbefestigungseinrichtung 26 fest an Deck des Wasserfahrzeugs 12 befestigt. Die Befestigungspunkte der beiden Enden des Befestigungsseils 24 liegen auf einer senkrecht zur Längsachse des Wasserfahrzeugs 12 verlaufenden Linie. Das Wasserfahrzeug 12 besitzt darüber hinaus Errichtungsmittel, die in dem in den Figuren 1-4 gezeigten ersten Ausführungsbeispiel zwei Errichtungsstangen 28 umfassen. Über eine schwenkbare Lagerung 30 sind die Errichtungsstangen 28 um eine ebenfalls senkrecht zur Längsachse des Wasserfahrzeugs 12 verlaufende horizontale Schwenkachse schwenkbar gelagert. Mit ihrem jeweils anderen Ende sind die Errichtungsstangen 28 in dem in den Figuren 1 und 2 gezeigten Zustand an dem Befestigungsseil 24 befestigt. Zum Aufrichten der Errichtungsstangen 28 ist in dem gezeigten Beispiel jeweils ein Hydraulikzylinder 32 vorgesehen. In dem in den Figuren 1 und 2 gezeigten Zustand spannen die Errichtungsstangen 28 das Befestigungsseil 24 Trapezähnlich auf. Dadurch wird das Befestigungsseil 24 abschnittsweise auf eine Höhe über dem Wasserfahrzeug 12 gebracht, wobei die Höhe im Einzelnen durch eine Längenverstellbarkeit der Errichtungsstangen 28 eingestellt werden kann. Dadurch ist es möglich, den oberen Befestigungspunkt 34 des Befestigungsseils 24 an die Höhe der Aufhängungseinrichtung 18 abhängig vom Tidenstand anzupassen. Durch ein entsprechendes Manövrieren des Wasserfahrzeugs 12 kann das Befestigungsseil 24 in Kontakt mit dem Aufhängungshaken 18 gebracht werden, wobei dieser das Befestigungsseil 24 in dem oberen leicht durchhängenden Bereich einfängt. Dieser Zustand ist in Figur 2 gezeigt.

Anschließend werden die oberen Enden der Errichtungsstangen 28 von dem Befestigungsseil 24 gelöst und die Errichtungsstangen 28 können durch Einfahren der Hydraulikzylinder 32 in eine horizontale Position geschwenkt und an Deck des Wasserfahrzeugs 12 abgelegt werden, wie dies in Figur 3 gezeigt ist. Wird nun das Befestigungsseil 24 auf die Seilwinde 22 aufgewickelt, hebt sich das Wasserfahrzeug 12 selbsttätig aus dem Wasser, wie dies in Figur 3 gezeigt ist. In diesem Zustand kann auf dem Wasserfahrzeug 12 befindliches Personal über eine in den Figuren 1-4 nicht näher dargestellte Zugangsöffnung zur Wartung in den Windenergieanlagenturm 14 einsteigen. Nach Abschluss der Wartung kann das Wasserfahrzeug 12 mit dem Personal wieder durch Abwickeln des Befestigungsseils 24 von der Seilwinde 22 ins Wasser abgelassen werden, wie dies in Figur 4 gezeigt ist. Im abgesenkten Zustand wird das Befestigungsseil 24 über die lösbare Deckbefestigungsseinrichtung 26 von dem Wasserfahrzeug 12 gelöst und durch erneutes Aufwickeln auf die Seilwinde 22 nach oben durch die Aufhängungseinrichtung 18 hindurch gezogen. Über eine in Figur 4 gezeigte Verbindung 36 ist mit dem Befestigungsseil 24 ein Pilotseil 38 verbunden, welches dabei von einer in den Figuren nicht näher dargestellten Pilotseilwinde abgewickelt wird. Es verhindert, dass das Befestigungsseil 24 unkontrolliert auf das Wasserfahrzeug 12 herabfallen kann. Sobald das Befestigungsseil 24 wieder vollständig auf dem Wasserfahrzeug 12 verbracht wurde, kann das Pilotseil 38 von diesem gelöst und mittels der Pilotseilwinde wieder aufgewickelt werden.

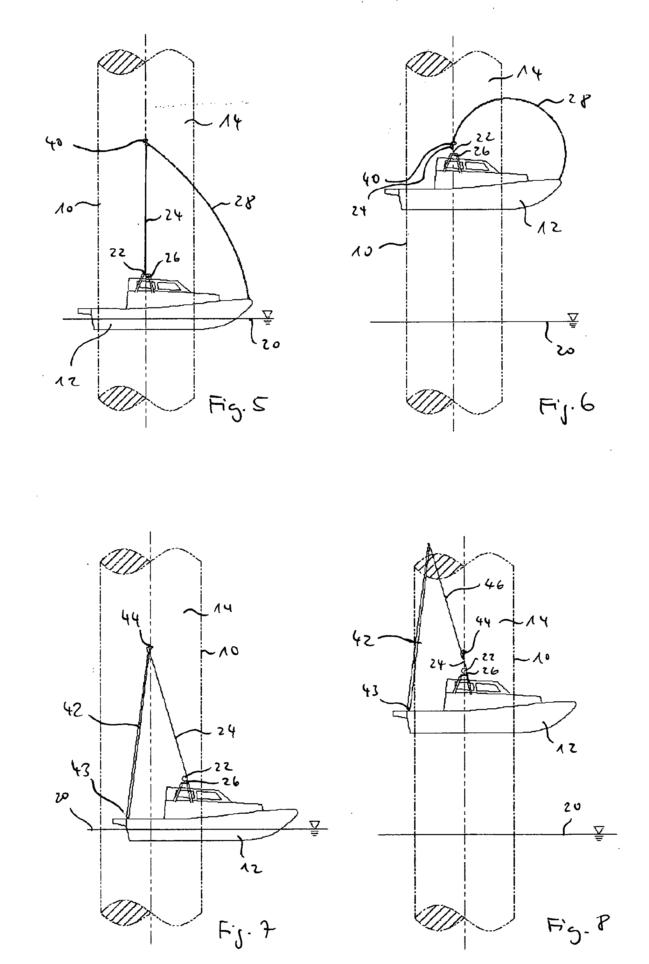

In den Figuren 5 und 6 ist ein erfindungsgemäßes Wasserfahrzeug 12 gemäß einem zweiten Ausführungsbeispiel in zwei unterschiedlichen Betriebspositionen gezeigt. Das Wasserfahrzeug 12 aus den Figuren 5 und 6 unterscheidet sich von dem in den Figuren 1-4 gezeigten Wasserfahrzeug 12 darin, dass zwei Errichtungsstangen 28 vorgesehen sind, die jedoch fest an dem Bug des Wasserfahrzeugs 12 befestigt sind, beispielsweise hintereinander entlang einer senkrecht zur Längsrichtung des Wasserfahrzeugs 12 verlaufenden Linie. An ihrem anderen Ende sind sie mit einer Befestigungsvorrichtung 40 verbunden, an der zum einen das Befestigungsseil 24 befestigt ist, und die zum anderen lösbar an der in den Figuren 5 und 6 aus Gründen der Einfachheiten nicht näher dargestellten Aufhängungseinrichtungen des Windenergieanlagenturms 14 befestigbar ist. Bei dem Ausführungsbeispiel nach den Figuren 5 und 6 sind die Errichtungsstangen 28 in starkem Maße biegsam. In dem in Figur 5 gezeigten aufgerichteten Zustand der Errichtungsstangen 28 halten sie das Befestigungsseil 24 über dem Wasserfahrzeug 12. Das Befestigungsseil 24 kann dabei mit einem Ende an dem Wasserfahrzeug und einem Ende an der Seilwinde befestigt sein oder nur mit seinem einen Ende an der Seilwinde und mit seinem anderen Ende an der Befestigungsvorrichtung. Im erstgenannten Fall kann das Seil 24 durch die Befestigungsvorrichtung geführt werden. Die Höhe der Befestigungsvorrichtung 40 kann durch geeignetes Abwickeln des Befestigungsseils 24 von der Seilwinde 22 angepasst werden. Das Wasserfahrzeug 12 wird dann in die Nähe der Aufhängungseinrichtung des Windenergieanlagenturms 14 manövriert, so dass die Befestigungsvorrichtung 40 an der Aufhängungseinrichtung des Windenergieanlagenturms 14 einrastet. Wird nun das Befestigungsseil 24 auf die Seilwinde 22 aufgewickelt, kommt es zu einem Verbiegen der Errichtungsstangen 28 und gleichzeitig zu einem Anheben des Wasserfahrzeugs 12 aus dem Wasser, wie dies in Figur 6 gezeigt ist. Zum Absenken des Wasserfahrzeugs 12 kann anschließend wiederum das Befestigungsseil 24 von der Seilwinde 22 abgewickelt werden. Sobald das Wasserfahrzeug 12 die Wasseroberfläche wieder erreicht hat, wird beispielsweise durch eine Fernbedienungseinrichtung die Verbindung zwischen der Befestigungsvorrichtung 40 und der Aufhängungseinrichtung 18 gelöst, so dass das Wasserfahrzeug 12 sich von der Offshore-Struktur 10 entfernen kann.

In den Figuren 7 und 8 ist ein erfindungsgemäßes Wasserfahrzeug 12 gemäß einem dritten Ausführungsbeispiel gezeigt. Dieses Wasserfahrzeug 12 unterscheidet sich von dem in den Figuren 1-6 gezeigten Wasserfahrzeug darin, dass als Errichtungsmittel ein in dem gezeigten Beispiel A-förmiger Errichtungsrahmen 42 vorgesehen ist. Der Errichtungsrahmen 42 besitzt zwei in den Figuren 7 und 8 senkrecht zur Zeichenebene hintereinander liegende Schenkel, die mit ihren unteren Enden jeweils entlang einer gemeinsamen horizontalen und senkrecht zur Längsrichtung des Wasserfahrzeugs 12 verlaufenden Schwenkachse 43 gelagert sind. An ihren miteinander verbundenen oberen Enden sind die Schenkel des Errichtungsrahmens 42 wiederum lösbar mit einer Befestigungsvorrichtung 44 verbunden, an der das Befestigungsseil 24 befestigt ist. In dem in Figur 7 gezeigten aufgerichteten Zustand des Rahmens 24 wird das Wasserfahrzeug 12 in eine Position manövriert, in der die Befestigungsvorrichtung 44 in die nicht näher dargestellte Aufhängungseinrichtung der Offshore-Struktur einklinkt. Beispielsweise mittels einer Fernbedienungseinrichtung oder auch selbsttätig kann sich dann die Befestigungsvorrichtung 44 von dem Errichtungsrahmen 42 lösen. Wird nun über die Seilwinde 22 das Befestigungsseil 24 aufgewickelt, wird die fest an dem Befestigungsseil 24 befestigte Befestigungsvorrichtung 44 in Richtung des Wasserfahrzeugs 12 gezogen, wobei das Wasserfahrzeug 12 sich aus dem Wasser hebt, wie dies in Figur 8 gezeigt ist. An der dem Befestigungsseil 24 abgewandten Seite der Befestigungsvorrichtung 44 ist mit dieser ein Pilotseil 46 verbunden, welches entlang des Verbindungspunkts der beiden Schenkel des Errichtungsrahmen 42 verläuft und mit einer an Bord des Wasserfahrzeugs 12 angeordneten Pilotseilwinde (nicht dargestellt) verbunden ist. Soll das Wasserfahrzeug 12 aus dem in Figur 8 in dem gezeigten Zustand wieder abgesenkt werden, wird über die Seilwinde 22 das Befestigungsseil 24 abgelassen und gleichzeitig über die Pilotseilwinde das Pilotseil 46 eingeholt. Dabei gelangt die Befestigungsvorrichtung 44 zurück zu der Verbindung der beiden Schenkel des Errichtungsrahmens 42. Anschließend kann die Befestigungsvorrichtung 44 von der Aufhängungseinrichtung der Offshore-Struktur 10 gelöst werden und das Wasserfahrzeug 12 kann sich entfernen.

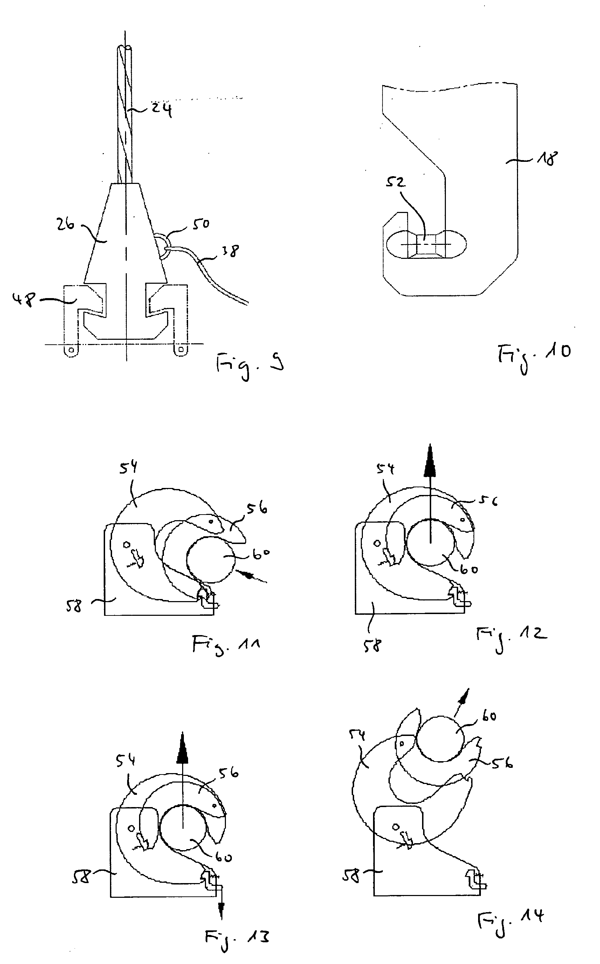

In Figur 9 ist in einer vergrößerten vertikalen Schnittansicht die bei dem Ausführungsbeispiel nach den Figuren 1-4 vorgesehene Deckbefestigungseinrichtung 26 gezeigt. Die Deckbefestigungseinrichtung 26 besitzt einen umlaufenden Hinterschnitt, in den in an sich bekannter Weise eine an Deck des Wasserfahrzeugs 12 befestigte hakenförmige Verriegelung 48 eingreift. Durch Öffnen der Verriegelung 48 wird auch die Befestigungseinrichtung 26 gelöst. Zu erkennen ist, dass die Befestigungseinrichtung 26 eine Kegelstumpfgrundform besitzt und in Richtung des Befestigungsseils 24 konisch zuläuft, um ohne Widerstand durch die Aufhängungseinrichtung 18 hindurchlaufen zu können. Seitlich ist an der Befestigungseinrichtung 26 eine Öse 50 vorgesehen, die das Pilotseil 38 trägt. In Figur 10 ist die beispielsweise bei dem Ausführungsbeispiel nach den Figuren 1-4 zum Einsatz kommende Aufhängungseinrichtung 18 ausschnittsweise in einem vergrößerten Vertikalschnitt gezeigt. Natürlich könnte diese Aufhängungseinrichtung 18 auch bei den in den Figuren 5-8 gezeigten Ausführungsbeispielen zum Einsatz kommen. Zu erkennen ist, dass der Aufhängungshaken 18 eine Rolle 52 aufweist, über die das Befestigungsseil 24 geführt wird. Die Deckbefestigungseinrichtung 26 kann durch den oberhalb der Rolle 52 gebildeten Freiraum des Hakens 18 hindurchlaufen. In den Figuren 11-14 ist in unterschiedlichen Betriebszuständen und jeweils in einer Schnittansicht die beispielsweise bei den Ausführungsbeispielen nach den Figuren 5-8 vorgesehenen Befestigungsvorrichtung 40, 44 gezeigt. Solche als Greifhaken ausgebildete Befestigungsvorrichtungen sind dem Fachmann an sich bekannt. Sie weisen zwei Halbschalen 54, 56 auf, die an einem Träger 58 schwenkbar gelagert sind. Eine Aufhängungseinrichtung der Offshore-Struktur 10 ist bei dem Bezugszeichen 60 schematisch gezeigt. In Figur 11 ist die Vorrichtung im geöffneten Zustand gezeigt, in der sie die Aufhängungseinrichtung 60 aufnehmen kann. In Figur 12 ist der an der Aufhängungseinrichtung 60 befestigte Zustand dargestellt. Wird in diesem Zustand eine Zugkraft in Fig. 13 nach unten ausgeübt, öffnet die Befestigungsvorrichtung, so dass die Aufhängungseinrichtung 60 aus dieser entweichen kann, wie in Figur 14 schematisch gezeigt.

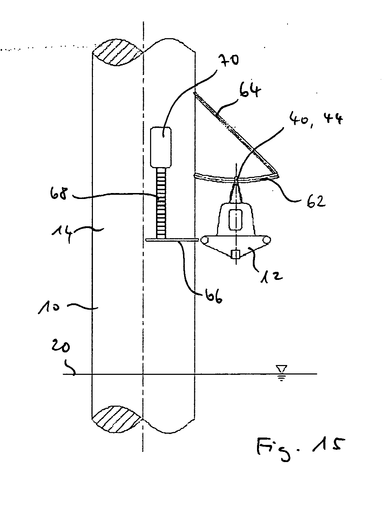

In Figur 15 ist ein weiteres Ausführungsbeispiel eines erfindungsgemäßen Systems gezeigt. In diesem Beispiel besitzt der Windenergieanlagenturm 14 ein im Wesentlichen in horizontaler Richtung verlaufendes Rohr 62 in welches eine beispielsweise bei den Ausführungsbeispielen nach den Figuren 5-8 vorgesehene Befestigungsvorrichtung 40, 44 einklinken kann. Über einen Kragbalken 64 ist das Rohr 62 nach außen vorstehend gehalten. Die leichte Biegung des Rohrs 62 führt zu einer mittigen Anordnung der Befestigungsvorrichtung 40, 44, so dass das Wasserfahrzeug 12 jederzeit korrekt ausgerichtet ist. Über eine Zugangsplattform 66 und eine Leiter 68 kann Wartungspersonal aus dem Wasserfahrzeug 12 durch einen Einstieg 70 in das Innere des Anlagenturms 14 gelangen.

## Patentansprüche

1. Wasserfahrzeug, umfassend mindestens ein Befestigungsseil (24), welches mit einem Ende mit einer auf dem Wasserfahrzeug (12) angeordneten Seilwinde (22) verbunden ist, weiter umfassend Errichtungsmittel, mit denen zumindest ein Abschnitt des Befestigungsseils (24) an einen Ort oberhalb des Wasserfahrzeugs (12) gebracht werden kann, so dass das Befestigungsseil (24) an einer oberhalb des Wasserfahrzeugs (12) befindlichen Aufhängungseinrichtung (18) einer Offshore-Struktur (10) eingehängt werden kann, wobei das Wasserfahrzeug (12) im an der Aufhängungseinrichtung (18) der Offshore-Struktur (10) eingehängten Zustand des Befestigungsseils (24) durch Aufwickeln des Befestigungsseils (24) auf die Seilwinde (22) an der Aufhängungseinrichtung (18) der Offshore-Struktur (10) hängend aus dem Wasser gehoben werden kann.

2. Wasserfahrzeug nach Anspruch 1, **dadurch gekennzeichnet, dass** das Befestigungsseil (24) mit einem ersten Ende auf dem Wasserfahrzeug (12) befestigt ist und mit einem zweiten Ende mit der auf dem Wasserfahrzeug (12) angeordneten Seilwinde (22) verbunden ist.

3. Wasserfahrzeug nach Anspruch 2, **dadurch gekennzeichnet, dass** die Befestigungspunkte der Enden des Befestigungsseils (24) auf dem Wasserfahrzeug (12) entlang einer senkrecht zur Längsachse des Wasserfahrzeugs (12) verlaufenden Linie angeordnet sind.

4. Wasserfahrzeug nach Anspruch 2 oder Anspruch 3, **dadurch gekennzeichnet, dass** das Befestigungsseil (24) mit seinem ersten Ende lösbar an dem Wasserfahrzeug (12) befestigt ist, und dass die Errichtungsmittel mindestens zwei Errichtungsstangen (28) umfassen, die jeweils mit einem ersten Ende auf dem Wasserfahrzeug (12) befestigt sind und die jeweils mit einem zweiten Ende lösbar an dem Befestigungsseil (24) befestigbar sind.

5. Wasserfahrzeug nach Anspruch 4, **dadurch gekennzeichnet, dass** die Errichtungsstangen (28) jeweils mit ihrem ersten Ende um mindestens eine horizontale Schwenkachse schwenkbar auf dem Wasserfahrzeug (12) befestigt sind.

6. Wasserfahrzeug nach einem der Ansprüche 4 oder 5, **dadurch gekennzeichnet, dass** sich die zweiten Enden der Errichtungsstangen (28) bei einem Einhängen des Befestigungsseils (24) in die Aufhängungseinrichtung (18) der Offshore-Struktur (10) selbsttätig von dem Befestigungsseil (24) lösen.

7. Wasserfahrzeug nach einem der Ansprüche 4 bis 6, **dadurch gekennzeichnet, dass** an dem ersten Ende des Befestigungsseils (24) ein Pilotseil (38) mit einem ersten Ende befestigt ist, wobei das Pilotseil (38) mit einem zweiten Ende an einer ebenfalls auf dem Wasserfahrzeug (12) angeordneten Pilotseilwinde befestigt ist.

8. Wasserfahrzeug nach einem der Ansprüche 4 bis 7, **dadurch gekennzeichnet, dass** die Errichtungsstangen (28) biegsam sind.

9. Wasserfahrzeug nach einem der Ansprüche 1 bis 3, **dadurch gekennzeichnet, dass** die Errichtungsmittel mindestens zwei biegsame Errichtungsstangen (28) umfassen, die jeweils mit einem ersten Ende auf dem Wasserfahrzeug (12) befestigt sind und die jeweils an einem zweiten Ende mit einer Befestigungsvorrichtung (40) verbunden sind, die zum einen das Befestigungsseil (24) führt, und die zum anderen lösbar an der Aufhängungseinrichtung (18) der Offshore-Struktur (10) befestigbar ist.

10. Wasserfahrzeug nach Anspruch 9, **dadurch gekennzeichnet, dass** die Befestigungsvorrichtung (40) eine das Befestigungsseil (24) führende Öse aufweist.

11. Wasserfahrzeug nach einem der Ansprüche 4 bis 10, **dadurch gekennzeichnet, dass** die Errichtungsstangen (28) längenverstellbar sind.

12. Wasserfahrzeug nach einem der Ansprüche 4 bis 11, **dadurch gekennzeichnet, dass** die Befestigungspunkte der ersten Enden der Errichtungsstangen (28) auf dem Wasserfahrzeug (12) entlang einer senkrecht zur Längsachse des Wasserfahrzeugs (12) verlaufenden Linie angeordnet sind.

13. Wasserfahrzeug nach einem der Ansprüche 1 bis 3, **dadurch gekennzeichnet, dass** die Errichtungsmittel einen Errichtungsrahmen (42) aufweisen, der mindestens zwei V-förmig miteinander verbundene Schenkel besitzt, wobei die Schenkel an ihren miteinander verbundenen Enden lösbar mit einer Befestigungsvorrichtung (44) verbunden sind, an der zum einen das Befestigungsseil (24) befestigt ist, und die zum anderen lösbar an der Aufhängungseinrichtung (18) der Offshore-Struktur (10) befestigbar ist, und wobei die Schenkel mit ihren freien Enden um mindestens eine gemeinsame horizontale Achse (43) schwenkbar auf dem Wasserfahrzeug (12) gelagert sind.

14. Wasserfahrzeug nach Anspruch 13, **dadurch gekennzeichnet, dass** die Schenkel mit ihren freien Enden um mindestens zwei gemeinsame horizontale Achsen schwenkbar auf dem Wasserfahrzeug (12) gelagert sind.

15. Wasserfahrzeug nach einem der Ansprüche 13 oder 14, **dadurch gekennzeichnet, dass** sich die Befestigungsvorrichtung (44) bei einem Befestigen an der Aufhängungseinrichtung (18) der Offshore-Struktur (10) selbsttätig von dem Errichtungsrahmen (42) löst.

16. Wasserfahrzeug nach einem der Ansprüche 13 bis 15, **dadurch gekennzeichnet, dass** auf dem Wasserfahrzeug (12) eine Pilotseilwinde angeordnet ist, mit der ein Pilotseil (46) mit einem ersten Ende verbunden ist, wobei das Pilotseil (46) durch eine im Bereich der Verbindung der Schenkel des Errichtungsrahmens (42) angeordnete Führungseinrichtung verläuft und mit einem zweiten Ende an der Befestigungsvorrichtung (44) befestigt ist.

17. Wasserfahrzeug nach einem der Ansprüche 9 bis 16, **dadurch gekennzeichnet, dass** die Befestigungsvorrichtung (40, 44) eine von dem Wasserfahrzeug aus fernbedienbare Entriegelungseinrichtung zum Lösen der Befestigungsvorrichtung (40, 44) von der Aufhängungseinrichtung (18) der Offshore-Struktur (10) aufweist.

18. System umfassend eine Offshore-Struktur (10) mit einer Aufhängungseinrichtung (18) und ein Wasserfahrzeug (12) nach einem der vorhergehenden Ansprüche.
